(19) Europäisches Patentamt
European Patent Office
Office européen des brevets

(11) **EP 2 645 550 B1**

(12) **EUROPÄISCHE PATENTSCHRIFT**

(45) Veröffentlichungstag und Bekanntmachung des Hinweises auf die Patenterteilung:
**21.12.2016 Patentblatt 2016/51**

(51) Int Cl.:
*H02K 29/06* *(2006.01)* *H02P 6/18* *(2016.01)*

(21) Anmeldenummer: **12161148.7**

(22) Anmeldetag: **26.03.2012**

(54) **Verfahren und Vorrichtung zum Ansteuern einer elektrischen Maschine**

Method and device for controlling an electric machine

Procédé et dispositif destinés à la commande d'une machine électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.10.2013 Patentblatt 2013/40**

(73) Patentinhaber: **C. & E. Fein GmbH**
**73529 Schwäbisch Gmünd-Bargau (DE)**

(72) Erfinder: **Kaufmann, Michael**
**73479 Ellwangen (DE)**

(74) Vertreter: **Witte, Weller & Partner Patentanwälte mbB**
**Postfach 10 54 62**
**70047 Stuttgart (DE)**

(56) Entgegenhaltungen:
**EP-A1- 1 796 258     EP-A1- 2 375 558**
**FR-A1- 2 815 192**

**Beschreibung**

Die vorliegende Erfindung betrifft ein Verfahren zum Ansteuern einer elektrischen Maschine, wobei die elektrische Maschine einen Stator, einen Rotor und eine Spulenanordnung mit wenigstens einem Spulenstrang zum Antreiben des Rotors aufweist, wobei die Spulenanordnung durch eine Steuerungsanordnung in einer Mehrzahl von Kommutierungsschritten unterschiedlich elektrisch angesteuert wird, um ein wechselndes Magnetfeld zum Antreiben des Rotors zu erzeugen, wobei die elektrische Ansteuerung der Spulenanordnung zwischen den Kommutierungsschritten gewechselt wird, und wobei dem Rotor eine Erfassungsanordnung zugeordnet ist, die wenigstens einen Rotationsparameter des Rotors erfasst, wobei aus einer Mehrzahl von Messwerten des Rotationsparameters ein Mittelwert ermittelt wird und ein Umschaltzeitpunkt zwischen den kommutierten Schritten auf der Grundlage des Mittelwerts eingestellt wird.

Die vorliegende Erfindung betrifft ferner eine Vorrichtung zum Ansteuern einer elektrischen Maschine mit einer Steuereinheit, die eine Mehrzahl von steuerbaren Schaltern aufweist und dazu ausgebildet ist, die elektrische Maschine zu bestromen.

Die vorliegende Erfindung betrifft schließlich ein Elektrowerkzeug mit einer elektrischen Maschine zum Bereitstellen eines Antriebsmoments und mit einer Vorrichtung zum Ansteuern der elektrischen Maschine der oben genannten Art.

Auf dem Gebiet der elektrischen Maschinen ist es allgemein bekannt, einen elektronisch kommutierten bürstenlosen Gleichstrommotor als permanenterregte Synchronmaschine auszubilden, bei dem ein rotierendes magnetisches Feld zum Antreiben des Rotors erzeugt wird, das mit der gleichen Drehzahl wie der angetriebene Rotor dreht. Das rotierende magnetische Feld wird dabei durch Erregerspulen erzeugt, die in verschiedenen Kommutierungsschritten unterschiedlich bestromt werden, um das rotierende magnetische Feld elektronisch zu erzeugen. Die Steuerung der einzelnen Kommutierungsschritte erfolgt üblicherweise dadurch, dass die Rotationsposition des Rotors erfasst wird und in Abhängigkeit der Rotationsposition die Kommutierungsschritte eingerichtet werden bzw. die Bestromung der Erregerspulen zwischen aufeinanderfolgenden Kommutierungsschritten umgeschaltet wird. Durch die korrekte Einstellung der Kommutierungszeitpunkte, zu denen die Kommutierung der Erregerspulen gewechselt wird, kann die elektrische Maschine definiert mit einem hohen Wirkungsgrad angesteuert werden.

Die Erfassung der Rotationsposition des Rotors erfolgt häufig durch Hall-Sensoren oder Encoder, die fest mit dem Stator verbunden sind, und die pro elektrischer Umdrehung sechs Zustände messen. Das bedeutet, dass im Falle einer sechspoligen Maschine 18 Zustände pro mechanischer Umdrehung durch die Hall-Sensoren erfasst werden. Die Hall-Sensoren sind üblicherweise einem Steuermagnet zugeordnet, der drehfest mit dem Rotor verbunden ist, und erfassen die Rotationsposition des Rotors entsprechend. Wenn der Rotor eine bestimmte Rotationsposition überschreitet, wird dies von dem Hall-Sensor erfasst und ein entsprechendes Signal an die Steuereinheit der elektrischen Maschine weitergeleitet, wodurch ein weiterer Kommutierungsschritt eingeleitet wird bzw. die Kommutierung geändert wird, um so das magnetische Feld der Erregerspulen entsprechend weiterzudrehen und im Ergebnis ein entsprechendes Drehmoment des Rotors zu erzeugen.

Die Einstellung des Kommutierungszeitpunkts hängt somit direkt von der korrekten Erfassung der Rotorlage mittels der Hall-Sensoren ab. Diese Messung der Rotorlage unterliegt jedoch im Allgemeinen mechanischen, elektrischen und magnetischen Toleranzen, so dass die Kommutierungszeitpunkte mit entsprechenden Toleranzen eingestellt werden. Die Toleranzen sind dabei mechanische Fertigungstoleranzen, die sich auf die Einbauposition der Hall-Sensoren auswirken und dadurch insbesondere Unterschiede im Rechts- bzw. im Linkslauf der elektrischen Maschine hervorruft, Abweichungen bzw. Toleranzen bei der Ausrichtung des Magnetfeldes des Steuermagneten und nicht symmetrische Magnetisierung des Steuermagneten, wodurch die Kommutierungszeitpunkte entsprechend variieren, und variierende Schaltschwellen der Hall-Sensoren, wodurch Unterschiede im Rechts- und Linkslauf und auch Unterschiede im Kommutierungszeitpunkt einer mechanischen Umdrehung entstehen können. Ferner können Signallaufzeiten in den Hall-Sensoren, in den Verbindungsleitungen und in den steuernden Mikrocontrollern zu statischen Verzögerungen der Kommmutierungszeitpunkte führen. Im Ergebnis variieren durch diese Toleranzen die Kommutierungszeitpunkte bzw. die Kommutierungsperioden, so dass Schwankungen der Stromaufnahme, Asymmetrien zwischen den Drehrichtungen auftreten und dadurch der Wirkungsgrad der elektrischen Maschine reduziert ist.

Aus der US 2003/0121685 A1 ist ein Elektrowerkzeug mit einem elektrischen Antrieb bekannt, bei dem der Kommutierungswinkel in Abhängigkeit der Batteriespannung und des Batteriestroms eingestellt wird, um für unterschiedliche Lastmomente den Wirkungsgrad zu steigern.

Nachteilig dabei ist es, dass Fertigungstoleranzen bei der Erfassung der Rotorlage und bei der Einstellung der Kommutierungszeitpunkte nicht berücksichtigt werden, wodurch der Wirkungsgrad der angesteuerten elektrischen Maschine im Allgemeinen reduziert ist.

Aus der EP 2 375 558 A1 ist ein Motortreiberbauteil mit einer Phasenkorrektureinheit zur Ausgabe eines Kommutierungssignals und einer Treibereinheit zur Ausgabe eines Treibersignals bekannt.

Aus der EP 1 796 258 A1 ist ein Verfahren zum Ansteuern eines elektronisch kommutierten Elektromotors bekannt, wobei eine durch Bewegung des Rotors in einer Rotorwicklung Induzierte elektrische Größe sensorlos erfasst wird und die relative Rotorlage mittels eines Sensors, der mit der Drehbewegung gekoppelt ist, erfasst wird.

Die Aufgabe der vorliegenden Erfindung ist es daher, ein Verfahren und eine Vorrichtung zum Ansteuern einer elektrischen Maschine bereitzustellen, das bzw. die den Wirkungsgrad der elektrischen Maschine erhöht.

Erfindungsgemäß wird diese Aufgabe bei dem eingangs genannten Verfahren dadurch gelöst, dass der Umschaltzeitpunkt ferner auf der Grundlage eines Kalibrationsfaktors eingestellt wird, der eine rotationsrichtungsbedingte Abweichung berücksichtigt.

Erfindungsgemäß wird diese Aufgabe ferner durch eine Vorrichtung zum Ansteuern einer elektrischen Maschine der eingangs genannten Art gelöst, bei der das Steuergerät dazu ausgebildet ist, das erfindungsgemäße Verfahren auszuführen.

Schließlich wird die vorliegende Erfindung gelöst durch ein Elektrowerkzeug mit einer elektrischen Maschine zum Bereitstellen eines Antriebsmoments und mit einer Vorrichtung zum Ansteuern der elektrischen Maschine der oben beschriebenen Art.

Dadurch, dass aus den Messwerten des Rotationsparameters ein Mittelwert gebildet wird, können Schwankungen eines gemessenen Kommutierungszeitpunkts und Schwankungen der gemessenen Rotationsposition des Rotors der elektrischen Maschine ausgeglichen werden, so dass im Ergebnis eine präzisere Einstellung bzw. Bestimmung des Kommutierungszeitpunkts bzw. des Umschaltzeitpunktes zwischen den Kommutierungsschritten möglich ist. Ferner kann durch den Kalibrationsfaktor, der die rotationsrichtungsbedingte Abweichung berücksichtigt, der Umschaltzeitpunkt präzise sowohl im Rechtslauf als auch im Linkslauf eingestellt werden. Dadurch können Toleranzen im Allgemeinen ausgeglichen werden, wodurch eine präzisere Ansteuerung möglich ist. Im Ergebnis wird der Wirkungsgrad der elektrischen Maschine erhöht und mechanische Vibrationen reduziert, da durch die präzisere Ansteuerung weniger Oberwellen entstehen.

In einer bevorzugten Ausführungsform ist der Mittelwert eine mittlere Zeitdauer.

Dadurch kann mit einfachen Mitteln ein Rotationsparameter erfasst und gemittelt werden und der entsprechende Umschaltzeitpunkt zwischen den Kommutierungsschritten mit geringem regelungstechnischem Aufwand eingestellt werden.

In einer bevorzugten Ausführungsform ist der gemessene Rotationsparameter eine Kommutierungsperiodendauer des Rotors.

Dadurch, dass die Kommutierungsperiodendauer erfasst und gemittelt wird, kann mit geringem regelungstechnischen Aufwand eine nahezu äquidistante Kommutierung eingestellt werden, wodurch der Kommutierungszeitpunkt besonders präzise eingestellt werden kann.

Es ist weiterhin bevorzugt, wenn der Umschaltzeitpunkt auf der Grundlage eines vorherigen Umschaltzeitpunktes und der dem Mittelwert entsprechenden Zeitdauer bestimmt wird.

Dadurch, dass von jedem vorherigen Umschaltzeitpunkt ausgehend der neue Umschaltzeitpunkt zwischen den Kommutierungsschritten eingestellt wird, können größere Phasenverschiebungen zwischen den ermittelten Umschaltzeitpunkten und der entsprechenden Rotorlage vermieden werden, wodurch dauerhafte Abweichungen verhindert werden können.

Es ist weiterhin bevorzugt, wenn der Mittelwert als gleitender Mittelwert bestimmt wird.

Dadurch kann der regelungstechnische Aufwand bzw. der Rechenaufwand und die Menge der zu speichernden Daten reduziert werden.

Es ist weiterhin bevorzugt, wenn der Umschaltzeitpunkt auf der Grundlage des Kalibrierungsfaktors verschoben wird.

Dadurch kann mit einfachen Mitteln eine vorauseilende oder nacheilende Kommutierung eingestellt bzw. ausgeglichen werden.

Es ist weiterhin allgemein bevorzugt, wenn die Erfassungsanordnung einen Umschaltzeitpunkt auf der Grundlage einer Rotationsposition des Rotors erfasst.

Dadurch kann unabhängig ein entsprechender Kommutierungszeitpunkt auf der Grundlage der Rotationsposition des Rotors bestimmt werden, wodurch die Ansteuerung noch präziser erfolgen kann.

Es ist dabei besonders bevorzugt, wenn unter vorbestimmten Bedingungen zwischen den Kommutierungsschritten auf der Grundlage des erfassten Umschaltzeitpunktes umgeschaltet wird.

Dadurch kann in bestimmten Situationen, wie z.B. bei geringen Drehzahlen oder im Anlauf der elektrischen Maschine, wenn eine zu geringe Anzahl von Messwerten vorliegt, die elektrische Maschine auf der Grundlage der gemessenen Rotationspositionen angesteuert werden, so dass auch in Extremsituationen die elektrische Maschine zuverlässig angesteuert werden kann.

Es ist dabei besonders bevorzugt, wenn zwischen den Kommutierungsschritten auf der Grundlage des erfassten Umschaltzeitpunktes umgeschaltet wird, sofern eine vordefinierte Abweichung des bestimmten Umschaltzeitpunktes von dem erfassten Umschaltzeitpunkt überschritten wird.

Dadurch kann mit einfachen Mitteln eine dauerhafte Abweichung des bestimmten Umschaltzeitpunktes von der entsprechenden Rotationsposition des Rotors verhindert werden, wodurch das Ansteuerungsverfahren insgesamt präziser und flexibler wird.

Es ist weiterhin bevorzugt, wenn eine vordefinierte Anzahl von Messwerten zur Bestimmung des Mittelwertes erfasst wird.

Dadurch können größere Abweichungen des Umschaltzeitpunktes vermieden werden, da kurzzeitige Spitzenwerte des erfassten Rotationsparameters durch die Anzahl der erfassten Messwerte ausgeglichen werden können.

Es ist weiterhin bevorzugt, wenn die Erfassungsanordnung einen Magnetfeldsensor aufweist, der einer Magnetanordnung der elektrischen Maschine zugeordnet ist, um den Rotationsparameter zu erfassen.

Dadurch kann mit geringem technischen Aufwand berührungslos der Rotationsparameter erfasst werden.

Es ist alternativ bevorzugt, wenn die Erfassungsanordnung durch wenigstens einen Teil der Spulenanordnung gebildet ist, wobei der Rotationsparameter durch die Spulenanordnung erfasst wird.

Dadurch kann auf zusätzliche Sensoren zum Erfassen des Rotationsparameters verzichtet werden, da vorhandene Elemente der elektrischen Maschine zur Erfassung des Rotationsparameters verwendet werden.

Es ist weiterhin bevorzugt, wenn der Kalibrationsfaktor auf der Grundlage einer Drehzahl des Rotors und einer Rotationsposition des Rotors bestimmt wird.

Dadurch kann mit geringem Aufwand eine optimale Kalibrierung des Motors erfolgen, so dass sowohl im Rechts- als auch im Linkslauf der Kommutierungszeitpunkt präzise und optimal eingestellt werden kann.

Im Ergebnis wird gemäß der vorliegenden Erfindung ein Verfahren und eine Vorrichtung bereitgestellt, das bzw. die Schwankungen des Kommutierungszeitpunkts bedingt durch Fertigungstoleranzen ausgleicht, indem der erfasste Rotationsparameter des Rotors der elektrischen Maschine gemittelt wird und auf Grundlage des gemittelten Wertes ein präziser Kommutierungszeitpunkt eingestellt wird. Durch diese präzise Einstellung des Kommutierungszeitpunkts kann der Wirkungsgrad der elektrischen Maschine erhöht werden, da es zu einer geringeren Wärmeentwicklung durch Oberwellen kommt und wodurch ferner weniger mechanische Vibrationen erzeugt werden. Vorzugsweise ist der Rotationsparameter eine Kommutierungsperiodendauer, die durch einen entsprechenden Sensor erfasst wird und die Zeitdauer bzw. den Winkelbereich von einer Kommutierung des Rotors bildet. Sofern auf der Grundlage dieser gemittelten Periodendauer der Kommutierungszeitpunkt relativ zu einem vorausgegangenen Kommutierungszeitpunkt berechnet wird, lässt sich der Kommutierungszeitpunkt präzise bestimmen und fertigungsbedingte Toleranzen ausgleichen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine Steuerungsanordnung zum Ansteuern einer elektrischen Maschine mit Hall-Sensor und Steuermagnet;

Fig. 2    eine Steuerungsanordnung zum Ansteuern einer elektrischen Maschine mit Hall-Sensor und Streufelderfassung des Hauptmagneten;

Fig. 3    eine Steuerungsanordnung zum Ansteuern einer sensorlosen elektrischen Maschine;

Fig. 4    ein Diagramm zur Erläuterung von Drehzahlschwankungen und Periodendauerschwankungen einer elektrischen Maschine über zwei mechanische Umdrehungen;

Fig. 5    ein schematisches Ablaufdiagramm zur Bestimmung eines Mittelwertes der Kommutierungsperiodendauer;

Fig. 6    ein detailliertes Ablaufdiagramm zur Erläuterung eines Verfahrens zum Ansteuern einer elektrischen Maschine;

Fig. 7    ein schematisches Ablaufdiagramm zur Erläuterung eines Verfahrens zur Überprüfung des ermittelten Kommutierungszeitpunkts;

Fig. 8    einen Drehzahlverlauf der Rotordrehzahl in Abhängigkeit eines Abweichungswinkels zur Bestimmung eines Kalibrationsfaktors; und

Fig. 9    ein Elektrowerkzeug als Anwendungsbeispiel des erfindungsgemäßen Verfahrens.

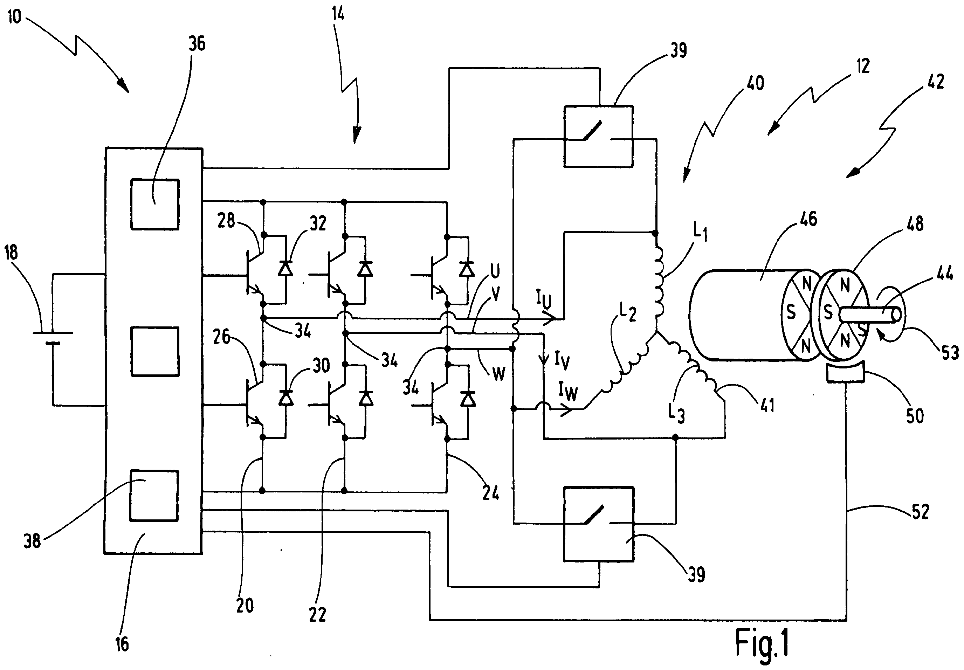

In Fig. 1 ist eine elektrische Versorgungseinheit zum Ansteuern einer elektrischen Maschine schematisch dargestellt und allgemein mit 10 bezeichnet.

Die Versorgungseinheit 10 ist elektrisch verbunden mit einer elektrischen Maschine 12, die in Fig. 1 lediglich schematisch dargestellt ist. Die Versorgungseinheit 10 weist einen Wechselrichter 14, eine Steuereinheit 16 und eine elektrische Energiequelle 18 auf. Der Wechselrichter 14 ist über die Steuereinheit 16 mit der Energiequelle 18 verbunden und dient dazu, die elektrische Maschine 12 dreiphasig zu bestromen. Der Wechselrichter 14 weist drei Halbbrücken 20, 22, 24 auf, die parallel zu der elektrischen Energiequelle 18 geschaltet sind, wobei die elektrische Energiequelle 18 als Gleichspannungsquelle, wie z.B. als Batterie oder Akkumulator 18, ausgebildet ist. Die drei Halbbrücken 20, 22, 24 weisen jeweils zwei steuerbare Schalter 26, 28 und jeweils zwei Freilaufdioden 30, 32 auf, die jeweils parallel zu einem der Schalter 26, 28 geschaltet sind. Zwischen den Schaltern 26, 28 ist jeweils ein Halbbrückenabgriff 34 gebildet, die jeweils mit einem Phasenleiter der drei Phasen U, V, W der elektrischen Maschine 12 verbunden sind.

Die Steuereinheit 16 ist mit dem Wechselrichter 14 verbunden und steuert die steuerbaren Schalter 26, 28, um die elektrische Maschine 12 entsprechend über die Phasen U, V, W zu bestromen. Die Steuereinheit 16 ist ferner mit der elektrischen Energiequelle 18 verbunden, um den Wechselrichter 14 entsprechend mit elektrischer Energie, in diesem Falle mit Gleichspannung, zu versorgen. Die Steuereinheit 16 weist einen Mikrocontroller 36 und einen Pulsweitenmodulationsgenerator 38 auf, um den Wechselrichter 14 entsprechend anzusteuern.

Die Steuereinheit 16 ist ferner mit der elektrischen Maschine 12 verbunden, um Sensorsignale der elektrischen Maschine 12 aufzunehmen, zu verarbeiten und den Wechselrichter 14 entsprechend anzusteuern, um die elektrische Maschine mit elektrischer Energie zu versorgen.

Die Steuereinheit 16 steuert die steuerbaren Schalter 26, 28 an. Durch wechselndes Öffnen und Schließen der steuerbaren Schalter 26, 28 wird zwischen den Phasenleitern U, V, W jeweils eine Ansteuerspannung angelegt, so dass sich entsprechend jeweils ein Phasenstrom IU, IV, IW einstellt, der die elektrische Maschine 12 antreibt.

Die elektrische Maschine 12 ist in Fig. 1 schematisch dargestellt und weist drei Spulenstränge L1, L2, L3 auf, die in dieser Ausführungsform in einer Sternschaltung zusammengeschaltet sind. Die Spulenstränge L1, L2, L3 sind entsprechend mit den Phasensträngen U, V, W verbunden und dienen dazu, ein wechselndes magnetisches Feld zu erzeugen, um die elektrische Maschine 12 anzutreiben. Die Spulenstränge L1, L2, L3 sind ferner mit zwei Kurzschlussschaltern 39 elektrisch verbunden und können über diese Kurzschlussschalter 39 kurzgeschlossen werden, um die elektrische Maschine 12 außer Betrieb zu setzen bzw. entsprechend abzubremsen. Die Spulenstränge L1, L2, L3 sind in dieser Ausführungsform einem Stator 40 der elektrischen Maschine 12 zugeordnet und bilden zusammen eine Statorwicklung 41. Die Kurzschlussschalter 39 sind über eine Steuerleitung mit der Steuereinheit 16 verbunden und werden von dieser gesteuert, um die elektrische Maschine 12 entsprechend abbremsen zu können. Als Kurzschlussschalter können auch die Schalter 26 und 28 verwendet werden.

Die elektrische Maschine 12 weist ferner einen Rotor 42 mit einer Welle 44 auf, an der ein Hauptmagnet 46 drehfest gelagert ist. An der Welle 44 ist ferner ein Steuermagnet 48 gelagert, dem ein Hall-Sensor 50 zugeordnet ist. Der Hall-Sensor 50 ist über eine Steuerleitung 52 mit der Steuereinheit 16 verbunden.

Zum Antreiben des Hauptmagneten 46 wird die Statorwicklung 41 der elektrischen Maschine 12 mittels Blockkommutierung bestromt. Dabei wird durch wechselndes Bestromen von jeweils zwei der Spulenstränge L1, L2, L3 ein rotierendes Magnetfeld erzeugt, das auf den Hauptmagneten 46 wirkt und auf den Hauptmagneten 46 entsprechend ein Antriebsmoment ausübt. Die Rotation des Magnetfeldes wird an die jeweilige Rotationsposition des Hauptmagneten 46 angepasst, so dass der Hauptmagnet 46 dem rotierenden Magnetfeld folgen kann. Um ein entsprechendes rotierendes Magnetfeld mittels Blockkommutierung zu erzeugen, wird über den Hall-Sensor 50 die Rotationsposition der Welle 44 und somit die Rotationsposition des Hauptmagneten 46 erfasst. An bestimmten Rotationspositionen des Hauptmagneten 46 wird ein Schaltzustand der steuerbaren Schalter 26, 28 des Wechselrichters 14 umgeschaltet, um ein anderes Paar der Spulenstränge L1, L2, L3 zu bestromen und das magnetische Feld entsprechend weiterzudrehen. Diese gemessenen Umschaltzeitpunkte werden im Folgenden als gemessene Kommutierungszeitpunkte $K_H$ bezeichnet. Dadurch kann die elektrische Maschine 12 mittels Blockkommutierung durch die elektrische Versorgungseinheit 10 angetrieben und ein entsprechendes Drehmoment 53 an der Welle 44 bereitgestellt werden. In einer besonderen Ausführungsform können auch mehrere Hall-Sensoren 50 vorgesehen sein.

In Fig. 1 ist die elektrische Maschine 12 schematisch mit jeweils einer Erregerspule pro Spulenstrang L1, L2, L3 dargestellt. In besonderen Ausführungsformen kann die elektrische Maschine 12 auch mehrere Erregerspulen pro Spulenstrang L1, L2, L3 aufweisen. Entsprechend kann auch der Hauptmagnet 46 und der Steuermagnet 48 mit mehr als vier Magnetisierungszonen N, S ausgebildet sein. Der Hall-Sensor 50 erfasst die jeweilige Magnetisierungszone N, S des Steuermagneten 48, die ihm zugeordnet sind, und kann somit den Wechsel zwischen zwei der Magnetisierungszonen N, S erfassen. Bei jedem Wechseln der Magnetisierungszone N, S wird ein Signal über die Steuerleitung 52 an die Steuereinheit 16 weitergeleitet, um so ein Umschalten der Ansteuerung bzw. ein Umschalten den Kommutierung der elektrischen Maschine 12 zu bewirken. Die Dauer zwischen zwei gemessenen Kommutierungszeitpunkten $K_H$ wird Kommutierungsperiodendauer KP genannt und kann von der Steuereinheit 16 anhand der Signale des Hall-Sensor 50 berechnet werden.

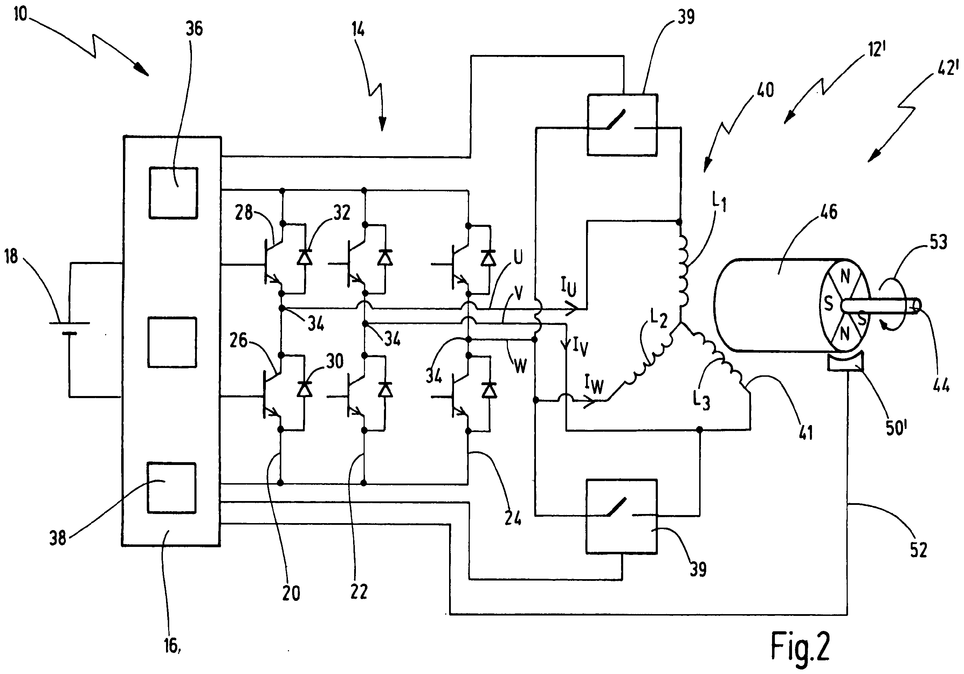

Fig. 2 zeigt eine besondere Ausführungsform der elektrischen Versorgungseinheit 10 aus Fig. 1, bei der der Hall-Sensor 50' ein magnetisches Streufeld des Hauptmagneten 46 erfasst. Die elektrische Maschine 12' entspricht im Wesentlichen der elektrischen Maschine aus Fig. 1. Gleiche Elemente sind mit gleichen Bezugsziffern bezeichnet, wobei hier lediglich die Besonderheiten erläutert sind.

Bei dieser Ausführungsform aus Fig. 2 weist die elektrische Maschine 12' keinen gesonderten Steuermagneten zur Erfassung der Rotorlage des Hauptmagneten 46, auf. Bei dieser Ausführungsform wird ein magnetisches Streufeld der Magnetisierungszonen N, S des Hauptmagneten 46 durch den Hall-Sensor erfasst, um die Rotorlage des Rotors 42' zu bestimmen.

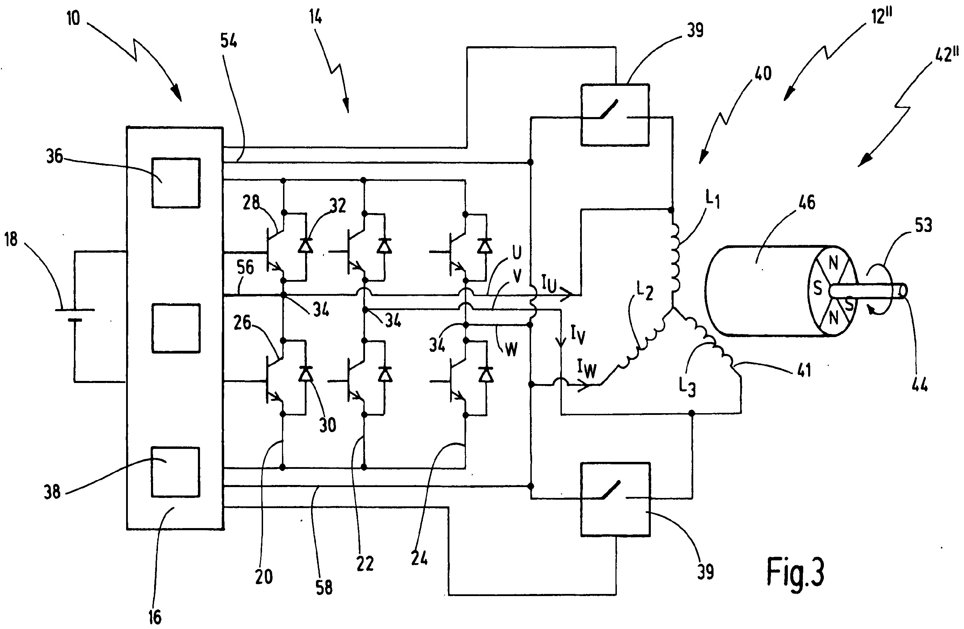

Fig. 3 zeigt eine alternative Ausführungsform der Versorgungseinheit 10 zur Ansteuerung der elektrischen Maschine 12, die keinen gesonderten Steuermagneten aufweist. Gleiche Elemente sind mit gleichen Bezugsziffern bezeichnet, wobei hier lediglich die Besonderheiten erläutert sind.

Bei der Ausführungsform aus Fig. 3 weist die elektrische Maschine 12" keinen gesonderten Rotorlagensensor, also keinen Hall-Sensor 50 zur Erfassung der Rotorlage des Hauptmagneten 46, auf. Bei dieser Ausführungsform werden die Erregerspulen des Stators 40 verwendet, um die Rotorlage des Rotors 42" zu erfassen. Dazu sind die Spulenstränge L1, L2, L3 jeweils mittels einer Rückführungsleitung 54, 56, 58 elektrisch mit der Steuereinheit 16 verbunden, um die jeweilige Phasenspannung an die Steuereinheit 16 zurückzuführen. Um die Rotorlage des Rotors 42" zu erfassen, wird jeweils die Spannung in einer nicht bestromten Erregerspule erfasst und auf Grundlage dieser erfassten Spannung wird die Rotorlage bestimmt. Dabei wird jeweils ein Nulldurchgang der erfassten Phasenspannung in positiver oder negativer Richtung erfasst und verwendet, um ein Umschalten des Wechselrichters 14 auszulösen.

Zur Erfassung der Rotorlage in dieser Ausführungsform kann die Phasenspannung direkt an den Mikrocontroller 36 zurückgeführt werden. In einer alternativen Ausführungsform, sofern der Mikrocontroller 36 nicht für die auftretenden Spannungswerte ausgelegt ist, kann die Spannung auch über ein Widerstandsnetzwerk skaliert zurückgeführt werden.

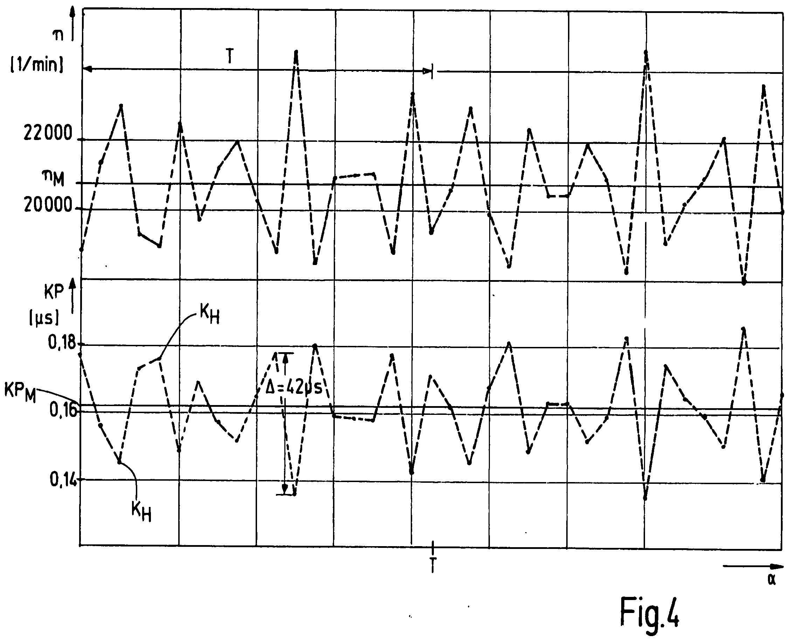

In Fig. 4 ist eine Drehzahl n der elektrischen Maschine 12 und eine Hall-Periodendauer bzw. eine Kommutierungsperiodendauer KP in Abhängigkeit der Rotationsposition $\alpha$ des Rotors 42 für zwei mechanische Umdrehungen T dargestellt.

In Fig. 4 sind die jeweiligen gemessenen Kommutierungszeitpunkte $K_H$, also wenn von einer Kommutierung zur nächsten umgeschaltet wird bzw. werden soll, in Abhängigkeit der Rotationsposition $\alpha$ als Punkte dargestellt. Aus Fig. 4 ist ersichtlich, dass die Drehzahl n des Rotors 42 über eine mechanische Umdrehung zwischen den einzelnen Kommutierungszeitpunkten $K_H$ stark schwankt, und zwar etwa in diesem Beispiel zwischen 1900 bis 2400 U/min. Entsprechend schwankt auch die Hall-Periodendauer bzw. die Kommutierungsperiodendauer KP zwischen 0,14-0,18 $\mu$sec, da sich die Kommutierungsperiodendauer KP umgekehrt proportional zur Drehzahl n des Rotors 42 verhält.

In Fig. 4 ist ferner ein Drehzahlmittelwert $n_M$ und ein Kommutierungsperiodendauermittelwert $KP_M$ dargestellt, der jeweils einen entsprechenden Mittelwert über eine mechanische Umdrehung T bildet.

Die Schwankung der Drehzahl n und der Kommutierungsperiodendauer KP ist bedingt durch Toleranzen innerhalb des Rotorlagenerfassungssystems. Die Toleranzen entstehen unter anderem durch eine ungenaue Platzierung des Hall-Sensors 50, 50' relativ zu dem Steuermagneten 48 bzw. dem Hauptmagneten 46, wodurch Unterschiede zwischen dem Rechts- und dem Linkslauf des Rotors 42, 42' und Abweichungen zwischen den einzelnen Kommutierungsschritten auftreten. Ferner treten Abweichungen in der absoluten Lage des Steuermagneten 48 relativ zum Hauptmagneten 46 auf, wodurch Abweichungen zwischen dem Rechts- und dem Linkslauf des Rotors 42, 42' auftreten können. Weiterhin entstehen derartige Toleranzen durch eine unsymmetrische Magnetisierung des Steuermagneten 48 oder des Hauptmagneten 46. Üblicherweise weist der Steuermagnet 48 bzw. der Hauptmagnet 46 eine gerade Anzahl von Magnetisierungsbereichen N, S auf, wobei jeder Bereich einen identischen Winkelbereich abdeckt. Durch Variationen der Magnetisierung des Steuermagneten 48 bzw. des Hauptmagneten 46 werden die Magnetisierungsbereiche unterschiedlich groß ausgebildet, so dass Unterschiede zwischen den einzelnen gemessenen Kommutierungszeitpunkten $K_H$ entstehen. Ferner unterliegt eine Schaltschwelle des Hall-Sensors 50, 50' gewissen fertigungsbedingten Schwankungen, so dass ein Wechsel zwischen den Magnetisierungsbereichen N, S durch den Hall-Sensor 50, 50' unterschiedlich erfasst werden. Dadurch entstehen sowohl Unterschiede im Rechts- und Linkslauf des Rotors 42, 42' als auch Unterschiede zwischen den einzelnen Kommutierungsschritten.

Bei einer sensorlosen elektrischen Maschine 12, wie sie in Fig. 3 dargestellt ist, treten Toleranzen auf durch unterschiedliche Schaltschwellen von Komparatoren, die die jeweiligen induzierten Spannungen der Erregerspulen messen. Dadurch wird der jeweilige Nulldurchgang der induzierten Spannungen mit einem Versatz in positiver oder negativer Richtung gemessen, wodurch eine vorauseilende oder nacheilende Kommutierung entsteht. Dadurch entstehen Unterschiede zwischen den einzelnen Kommutierungsschritten bzw. eine schwankende Kommutierungsperiodendauer KP. Ferner können Asymmetrien im Widerstandsnetzwerk für die jeweilige Spannungsteilung und fertigungsbedingte Schwankungen der jeweiligen Widerstandswerte zu weiteren Unterschieden zwischen den einzelnen Kommutierungsschritten führen.

Sowohl die Erfassung des Magnetfeldes des Steuermagneten 48 wie in Fig. 1 gezeigt als auch die Erfassung des Streufeldes des Hauptmagneten 46 wie in Fig. 2 gezeigt mit einem Hall-Sensor 50, 50' als auch die Erfassung mittels den Erregerspulen kann weitere Toleranzen aufweisen. Diese entstehen durch entsprechende Gatterlaufzeiten in den Komparatoren bzw. den Hall-Sensoren 50, 50', so dass das erfasste Signal eine gewisse Laufzeit benötigt, um der Steuereinheit 16 bereitgestellt zu werden. Diese Gatterlaufzeit wirkt sich als statische Verzögerung des jeweiligen Kommutierungszeitpunkts $K_H$ aus. Weiterhin können Verzögerung innerhalb des Mikrocontrollers 36 bis zur Ausführung der jeweiligen Kommutierung zu Verzögerungen führen. Hierdurch entsteht eine weitere statische Verzögerung des jeweiligen Kommutierungszeitpunkts $K_H$.

Im Ergebnis führen diese Toleranzen zu Verschiebungen der jeweiligen Kommutierungszeitpunkte $K_H$ sowie zu Variationen der Kommutierungsperiodendauer KP. Dies führt zu einer ungenauen Ansteuerung der elektrischen Maschine 12, wodurch Schwankungen der Stromaufnahme und Asymmetrien zwischen den beiden Drehrichtungen auftreten und der Wirkungsgrad im Allgemeinen reduziert ist.

Aus Fig. 4 wird deutlich, dass die Kommutierung sehr starken Schwankungen unterliegt. Wenn innerhalb des gesamten Ansteuerungssystems zur Erfassung der Rotorlage und zur Ansteuerung der elektrischen Maschine 12 keine Toleranzen vorlägen, wären die Kommutierungszeitpunkte bei konstanter Drehzahl n äquidistant.

Um die Schwankungen der Kommutierungszeitpunkte $K_H$ auszugleichen, wird ein Mittelwert $KP_M$ der Hall-Periodendauer bzw. der Kommutierungsperiodendauer KP, die allgemein durch das Rotationspositionserfassungssystem erfasst werden, bestimmt. Anhand des ermittelten Mittelwertes $KP_M$ wird dann der folgende Kommutierungszeitpunkt $K_T$ berechnet und einem Timer übergeben. Nach Ablauf der so bestimmten Zeitspanne wird durch die Steuereinheit 16 der nächste Kommutierungsschritt ausgeführt und die steuerbaren Schalter 26, 28 des Wechselrichters 14 entsprechend umgeschaltet. Der Mittelwert $KP_M$ ist vorzugsweise ein gleitender Mittelwert. Bei begrenzten Rechen- und Speicheraufwand wird vorzugsweise die exponentielle Glättung verwendet. Der Mittelwert $KP_M$ errechnet sich anhand der Formel:

$$KP_M[t] = \frac{z * KP_M[t-1] + KP[t]}{z+1},$$

wobei $KP_M[t-1]$ der zuvor bestimmte Mittelwert, $KP[t]$ die gemessene aktuelle Kommutierungsperiodendauer und z ein Wichtungsfaktor für den vorausgegangenen Mittelwert ist, wobei z vorzugsweise gleich der Anzahl der Kommutierungsschritte einer mechanischen Umdrehung T ist, um die Toleranzen innerhalb der mechanischen Umdrehung zu minimieren.

Der nächste Kommutierungszeitpunkt $K_T[n+1]$ wird berechnet anhand der Formel:

$$K_T^*[n+1] = K_T^*[n] + KP_M[t]$$

$$K_T[n+1] = K_T^*[n+1] + k * KP_M[t] + c,$$

wobei k ein Kalibrierfaktor ist, um Toleranzen der unterschiedlichen Drehrichtungen des Rotors 42 auszugleichen, $K_T^*[n]$ der vorhergehende Kommutierungszeitpunkt ist ohne Offset durch den Kalibrierfaktor k, $KP_M$ der Mittelwert der Kommutierungsperiodendauer, und C eine Konstante ist, um Gatterlaufzeiten und Reaktionszeiten des Mikrocontrollers 36 zu kompensieren. Die Konstante C kann berechnet oder gemessen werden und ist unabhängig von der Drehzahl n. Dadurch, dass der Kommutierungszeitpunkt $K_T$ anhand des Mittelwerts $KP_M$ bestimmt wird, wirken sich Unterschiede in der erfassten Kommutierungsperiodendauer KP nur sehr gering aus, wodurch die Ansteuerung der elektrischen Maschine 12 im Allgemeinen präziser wird.

Der Kalibrierfaktor k ist vorzeichenbehaftet und dient dazu, toleranzbedingte Unterschiede zwischen den Drehrichtungen des Rotors 42 kompensieren zu können. Die Bestimmung des Kalibrierfaktors k erfolgt vorzugsweise am Ende des Herstellungsprozesses der elektrischen Maschine 12 und wird in einem nicht-flüchtigen Speicher, z.B. ein EEPROM, des Mikrocontrollers 36 abgespeichert und bei Bedarf ausgelesen.

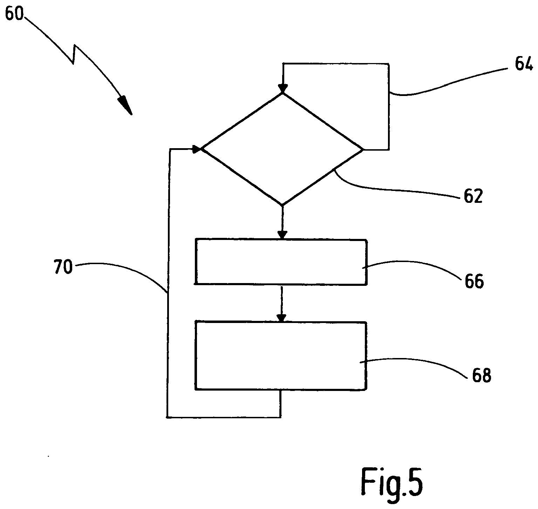

In Fig. 5 ist ein schematisches Ablaufdiagramm zum Berechnen des Mittelwerts $KP_M$ dargestellt und allgemein mit 60 bezeichnet. Zunächst wird geprüft, ob ein Signalwechsel des Hall-Sensors 50 oder ein Nulldurchgang der Phasenspannungen vorliegt und somit ein Kommutierungszeitpunkt $K_H$ gemessen wurde, wie es bei 62 gezeigt ist. Diese Abfrage wird wiederholt, bis ein entsprechendes Signal gemessen wird, wie es durch die Rückführung 64 gezeigt ist. Sofern das entsprechende Kommutierungssignal erfasst wird, wird bei 66 die Kommutierungsperiodendauer KP als Differenz zwischen den Kommutierungszeitpunkten $K_H$ ermittelt.

Aus der Kommutierungsperiodendauer KP wird bei 68 anhand der oben genannten Formel der Kommutierungsperiodendauermittelwert $KP_M$ ermittelt. Wenn der Kommutierungsperiodenmittelwert $KP_M$ ermittelt wurde, wird dieser zur Berechnung des Kommutierungszeitpunkts $K_H$ verwendet und das Verfahren 60 erneut begonnen und geprüft, ob ein entsprechendes Kommutierungssignal vorliegt, wie es durch die Rückführung 70 gezeigt ist.

Dadurch kann durch kontinuierliches Erfassen der Kommutierungszeitpunkte $K_H$ ein gleitender Mittelwert $KP_M$ der Kommutierungsperiodendauer KP bestimmt werden und der Wechselrichter 14 entsprechend angesteuert werden.

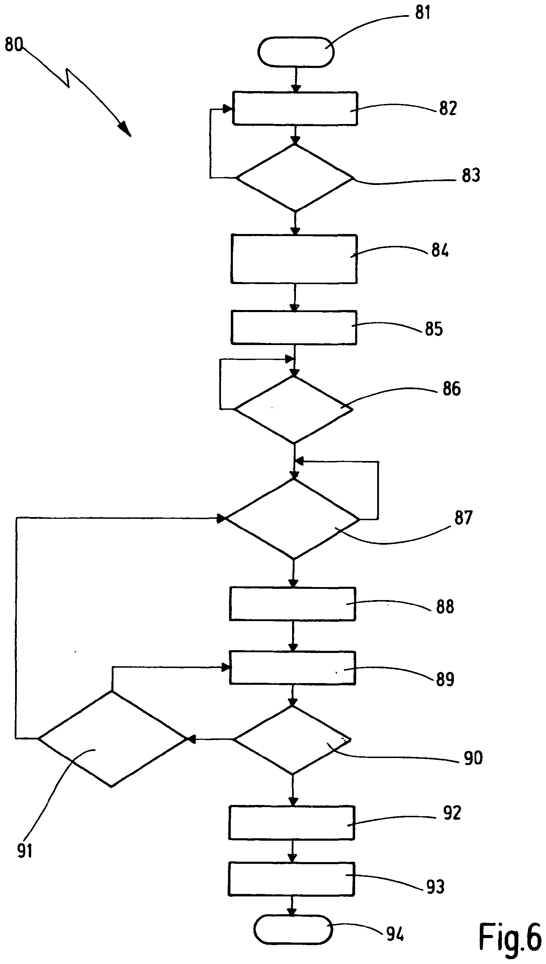

In Fig. 6 ist ein Ablaufdiagramm zur Erläuterung eines Verfahrens zum Steuern der elektrischen Maschine 12 schematisch dargestellt und allgemein mit 80 bezeichnet.

Das Verfahren 80 beginnt allgemein mit einem Aktivierungsschritt 81. Nach der Aktivierung 81 wird ein Signal eines Aktivierungsschalters, wie z.B. eines Gasgeberschalters, eingelesen, wie es bei 82 gezeigt ist, und bei 83 abgefragt, ob ein positives Startsignal vorliegt. Sofern das positive Startsignal vorliegt, wird bei 84 der Kalibrierfaktor k für die angeforderte Drehrichtung aus dem Speicher ausgelesen und die elektrische Maschine 12 bei 85 gestartet. Bei 86 wird geprüft, ob der Rotor 42 rotiert. Sofern der Rotor 42 rotiert, wird bei 87 geprüft, ob die Drehzahl n des Rotors 42 eine vordefinierte Mindestdrehzahl erreicht hat und ob die Drehzahl n einen stabilen Wert aufweist. Sofern bei 87 festgestellt wird, dass eine Mindestdrehzahl erreicht wurde und die Drehzahl stabil ist, wird bei 88 die Bestimmung des Kommutierungszeitpunkts $K_T$ aktiviert.

Nach Aktivierung der Bestimmung des Kommutierungszeitpunkts $K_T$ wird die mittlere Kommutierungsperiodendauer $KP_M$ nach dem Verfahren 60 ermittelt und der Kommutierungszeitpunkt $K_T$ durch den Mikrocontroller 36 anhand der oben angegebenen Formel berechnet. Die Steuereinheit 16 steuert dann den Wechselrichter 14 entsprechend an, um eine präzise Kommutierung bereitzustellen.

Bei 89 wird ein Signal des Aktivierungsschalters ausgelesen und bei 90 geprüft, ob die elektrische Maschine 12 angehalten werden soll. Sofern die elektrische Maschine 12 nicht angehalten werden soll, wird bei 91 geprüft, ob die Bestimmung des Kommutierungszeitpunkts $K_T$ nach dem Verfahren 60 aktiviert ist. Sofern die Kommutierungszeitpunktbestimmung 60 aktiviert ist, wird bei 89 wieder der Aktivierungsschalter ausgelesen und sofern die Kommutierungszeitpunktbestimmung 60 nicht aktiviert ist, wird bei 87 erneut geprüft, ob die Drehzahl n einen vordefinierten Wert erreicht und ob die Drehzahl n stabil ist.

Sofern bei 90 festgestellt wird, dass die elektrische Maschine 12 angehalten werden soll, wird bei 92 die Bestimmung des Kommutierungszeitpunktes $K_T$ deaktiviert und bei 93 die elektrische Maschine 12 über die Kurzschlussschalter 39 abgebremst. Bei 94 endet das Verfahren 80.

Parallel bzw. Zeitgleich zu dem Verfahren 80 wird permanent geprüft, ob die Bestimmung des Kommutierungszeitpunkts $K_T$ nach dem Verfahren 60 aktiviert ist und ob die Bestimmung gegebenenfalls neu gestartet werden muss, sofern sie deaktiviert wurde.

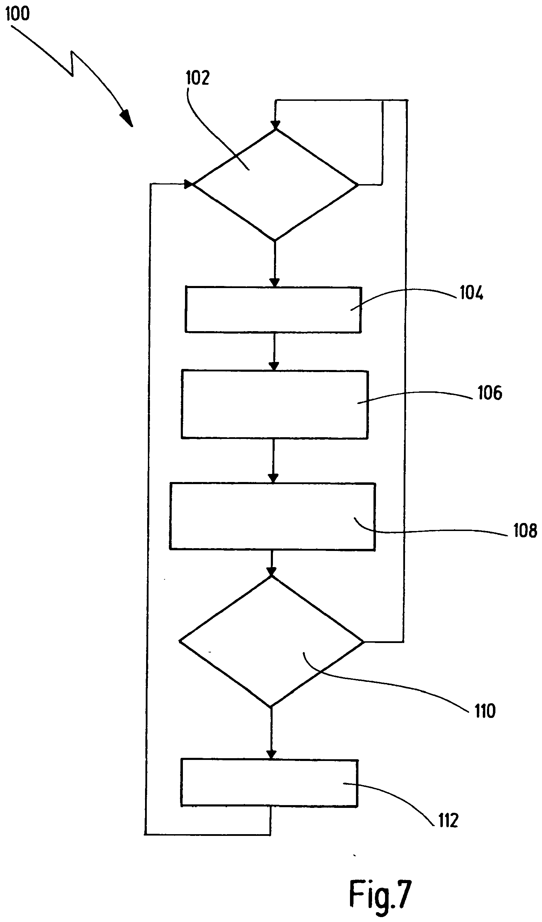

In Fig. 7 ist ein Ablaufdiagramm zur Erläuterung eines Verfahrens zum Überprüfen des ermittelten Kommutierungszeitpunkts $K_T$ nach dem Verfahren 60 dargestellt und allgemein mit 100 bezeichnet. Bei 102 wird dabei allgemein geprüft, ob ein Kommutierungszeitpunkt $K_T$ bestimmt wurde und der Wechselrichter 14 entsprechend umgeschaltet werden soll. Sofern die Kommutierung der elektrischen Maschine 12 umgeschaltet werden soll, wird bei 104 der Wechselrichter 14 entsprechend angesteuert. Bei 106 wird der folgende Kommutierungsschritt bestimmt und bei 108 der Zeitpunkt des folgenden Kommutierungsschritts $K_T$ berechnet. Bei 110 wird der berechnete Kommutierungszeitpunkt $K_T$ mit einem entsprechenden, durch das Rotationslagenerfassungssystem gemessenen Kommutierungszeitpunkt $K_H$ verglichen und ermittelt, ob die Differenz zwischen den beiden Zeitpunkten $K_T$, $K_H$ einen vordefinierten Wert überschreitet. Sofern der vordefinierte Wert überschritten ist, wird bei 112 die Ansteuerung auf der Grundlage des bestimmten bzw. berechneten Kommutierungszeitpunkts $K_T$ abgebrochen und die elektrische Maschine 12 auf der Grundlage des von dem Rotationslagenerfassungssystem gemessenen Kommutierungszeitpunkt $K_M$ angesteuert. Danach beginnt das Verfahren 100 erneut mit dem Schritt 102. Sofern bei 110 festgestellt wird, dass die Differenz zwischen dem gemessenen und dem bestimmten Kommutierungszeitpunkt $K_T$, $K_H$ kleiner als der vordefinierte Wert ist, beginnt das Verfahren 100 bei Schritt 102 erneut.

Durch das Verfahren 100 kann eine Phasenverschiebung zwischen dem gemessenen Kommutierungszeitpunkt $K_T$ und dem berechneten Kommutierungszeitpunkt $K_H$ ermittelt werden. Sofern die Abweichung zwischen diesen beiden Zeitpunkten zu groß wird, kann die Berechnung des Kommutierungszeitpunkts $K_T$ entsprechend abgebrochen werden und die elektrische Maschine 12 auf Grundlage des gemessenen Kommutierungszeitpunkts $K_H$ angesteuert werden. Dadurch kann eine dauerhafte Abweichung des berechneten Kommutierungszeitpunkts $K_T$ von dem gemessenen Kommutierungszeitpunkt $K_H$ vermieden werden.

Das Verfahren 100 ist eine separate Routine, die parallel zu dem Verfahren 80 und dem Verfahren 60 in der Steuereinheit 16 ausgeführt wird.

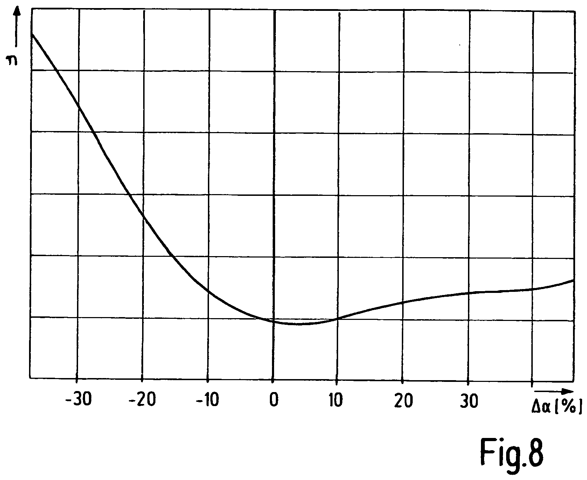

Fig. 8 zeigt einen Drehzahlverlauf n des Rotors 42 in Abhängigkeit eines Kommutierungswinkels $\Delta\alpha$ zur Bestimmung des Kalibrierfaktors k.

Der Kalibrierfaktor k ist ein Wert, der die Phasenverschiebung des Kommutierungszeitpunkts beeinflusst. Im Allgemeinen bedeutet ein Kalibrierfaktor k=0, dass der gemessene Kommutierungszeitpunkt $K_H$ und der bestimmte Kommutierungszeitpunkt $K_T$ phasengleich bzw. identisch sind. Die Bestimmung des Kommutierungszeitpunkts $K_H$ dient dabei lediglich dem Ausgleich der unterschiedlichen Kommutierungsperiodendauern KP. Sofern der Kalibrierfaktor k ungleich Null ist, bedeutet das, dass in Abhängigkeit der Rotationsrichtung des Rotors 42 eine vorauseilende oder nacheilende Kommutierung stattfindet. Dies kann bspw. dadurch entstehen, dass die Position des Hall-Sensors 50 verschoben ist, so dass in einer Rotationsrichtung eine vorauseilende Kommutierung und in der entgegengesetzten Richtung eine nacheilende Kommutierung stattfindet. Der Kalibrierfaktor k wirkt einer derartigen Verschiebung des Kommutierungszeitpunkts $K_T$ entgegen. Für beide Drehrichtungen gilt, dass die elektrische Maschine 12 optimal kalibriert ist, wenn ein Minimum der Drehzahl n innerhalb eines bestimmten Bereichs in der Nähe des gemessenen Kommutierungszeitpunkts $K_H$ ermittelt wird.

Entsprechend ist in Fig. 8 ein derartiger Drehzahlverlauf über der Phasenverschiebung $\Delta\alpha$ des Kommutierungswinkels dargestellt. Dabei ist ein Minimum der Drehzahl n bei etwa 5 % ermittelt worden. Um ein in beide Drehrichtungen des Rotors 42 symmetrisches Verhalten der elektrischen Maschine 12 zu erhalten, muss für die gemessene Drehrichtung eine nacheilende Kommutierung eingestellt werden.

Zur Optimierung des Wirkungsgrads der elektrischen Maschine 12 kann eine Verschiebung des berechneten Kommutierungszeitpunkts $K_T$ gegenüber dem gemessenen Kommutierungszeitpunkt $K_H$ variiert werden. Dabei bedeutet wiederum, dass eine positive Verschiebung eine vorauseilende Kommutierung und eine negative Verschiebung eine nacheilende Kommutierung zur Folge hat.

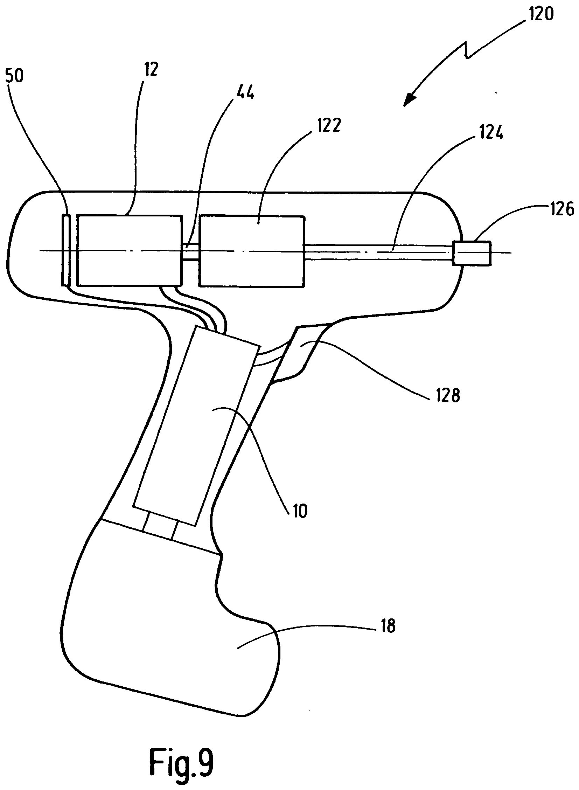

In Fig. 9 ist ein Elektrowerkzeug als bevorzugte Verwendung des erfindungsgemäßen Verfahrens schematisch dargestellt und mit 120 bezeichnet. Das Elektrowerkzeug 120 ist in dieser Ausführungsform als Bohrschrauber ausgebildet und weist ein Getriebe 122 auf, das über die Welle 44 mit der elektrischen Maschine 12 verbunden ist. Der elektrischen Maschine 12 ist die Rotorlagenerfassungseinrichtung 50 zugeordnet, um die Lage des Rotors 42 zu erfassen. Das Elektrowerkzeug 120 weist ferner die elektrische Energiequelle 18 auf, die als Akkumulator 18 ausgebildet ist und die elektrische Versorgungseinheit 10, die mit dem Akkumulator 18 verbunden ist und dazu dient, die elektrische Maschine 12 entsprechend anzusteuern.

Das Getriebe 122 ist über eine Abtriebswelle 124 mit einem Abtrieb 126 verbunden, der gleichzeitig zur Aufnahme eines entsprechenden Werkzeugs dient. Das Elektrowerkzeug 120 weist ferner einen Gasgebeschalter 128 auf, der mit der elektrischen Versorgungseinheit 10 verbunden ist und dazu dient, das Elektrowerkzeug 120 entsprechend zu aktivieren bzw. zu deaktivieren.

**Patentansprüche**

1.  Verfahren (80) zum Ansteuern einer elektrischen Maschine (12), wobei die elektrische Maschine (12) einen Stator (40), einen Rotor (42) und eine Spulenanordnung (41) mit wenigstens einem Spulenstrang (L1, L2, L3) zum Antreiben des Rotors (42) aufweist, wobei die Spulenanordnung (41) durch eine Steuerungsanordnung (10) in einer Mehrzahl von Kommutierungsschritten unterschiedlich elektrisch angesteuert wird, um ein wechselndes Magnetfeld zum Antreiben des Rotors (42) zu erzeugen, wobei die elektrische Ansteuerung der Spulenanordnung (41) zwischen den Kommutierungsschritten gewechselt wird (104), und wobei dem Rotor (42) eine Erfassungsanordnung (41; 50) zugeordnet ist, die wenigstens einen Rotationsparameter ($K_H$, KP) des Rotors (42) erfasst (66), wobei aus einer Mehrzahl von Messwerten des Rotationsparameters ($K_H$, KP) ein Mittelwert ($KP_M$) ermittelt wird (68) und ein Umschaltzeitpunkt ($K_T$) zwischen den Kommutierungsschritten auf der Grundlage des Mittelwerts ($KP_M$) eingestellt wird (104), **dadurch gekennzeichnet, dass** der Umschaltzeitpunkt ($K_T$) ferner auf der Grundlage eines Kalibrationsfaktors (k) eingestellt wird, der eine rotationsrichtungsbedingte Abweichung berücksichtigt.

2.  Verfahren nach Anspruch 1, **dadurch gekennzeichnet, dass** der Mittelwert ($KP_M$) eine mittlere Zeitdauer ($KP_M$) ist

3.  Verfahren nach Anspruch 1 oder 2, **dadurch gekennzeichnet, dass** der Rotationsparameter ($K_H$, KP) eine Kommutierungsperiodendauer (KP) des Rotors (42) ist.

4.  Verfahren nach einem der Ansprüche 1 bis 3, **dadurch gekennzeichnet, dass** der Umschaltzeitpunkt ($K_T$) auf der Grundlage eines vorherigen Umschaltzeitpunkts ($K_T$) und der dem Mittelwert ($KP_M$) entsprechenden Zeitdauer bestimmt wird (108).

5.  Verfahren nach einem der Ansprüche 1 bis 4, **dadurch gekennzeichnet, dass** der Mittelwert ($KP_M$) als gleitender Mittelwert ($KP_M$) bestimmt wird.

6.  Verfahren nach Anspruch 4 oder 5, **dadurch gekennzeichnet, dass** der Umschaltzeitpunkt ($K_T$) auf der Grundlage des Kalibrationsfaktors (k) verschoben wird.

7.  Verfahren nach einem der Ansprüche 1 bis 6, **dadurch gekennzeichnet, dass** die Erfassungsanordnung (41; 50) einen Umschaltzeitpunkt ($K_H$) auf der Grundlage einer Rotationsposition des Rotors (42) erfasst.

8.  Verfahren nach Anspruch 7, **dadurch gekennzeichnet, dass** unter vorbestimmten Bedingungen zwischen den Kommutierungsschritten auf der Grundlage des erfassten Umschaltzeitpunkts ($K_H$) umgeschaltet wird.

9.  Verfahren nach Anspruch 7 oder 8, **dadurch gekennzeichnet, dass** zwischen den Kommutierungsschritten auf der Grundlage des erfassten Umschaltzeitpunkts ($K_H$) umgeschaltet wird, sofern eine vordefinierte Abweichung des bestimmten Umschaltzeitpunkts ($K_T$) von dem erfassten Umschaltzeitpunkt ($K_H$) überschritten wird.

10. Verfahren nach einem der Ansprüche 1 bis 9, **dadurch gekennzeichnet, dass** eine vordefinierte Anzahl von Messwerten zur Bestimmung des Mittelwerts ($KP_M$) erfasst werden.

11. Verfahren nach einem der Ansprüche 1 bis 10, **dadurch gekennzeichnet, dass** die Erfassungsanordnung (50) einen Magnetfeldsensor (50) aufweist, der einer Magnetanordnung (46; 48) der elektrischen Maschine (12) zugeordnet ist, um den Rotationsparameter (KP) zu erfassen.

12. Verfahren nach einem der Ansprüche 1 bis 10, **dadurch gekennzeichnet, dass** die Erfassungsanordnung (41) durch wenigstens einen Teil der Spulenanordnung (41) gebildet ist, wobei der Rotationsparameter ($K_H$, KP) durch die Spulenanordnung (41) erfasst wird.

13. Verfahren nach einem der Ansprüche 5 bis 12, **dadurch gekennzeichnet, dass** der Kalibrationsfaktor (k) auf der Grundlage einer Drehzahl (n) des Rotors (42) und einer Rotationsposition des Rotors (42) bestimmt wird.

14. Vorrichtung (10) zum Ansteuern einer elektrischen Maschine (12), mit einer Steuereinheit (14), die eine Mehrzahl von steuerbaren Schaltern (26, 28) aufweist und dazu ausgebildet ist, die elektrische Maschine (12) zu bestromen, und mit einem Steuergerät (16) zur Ansteuerung der Steuereinheit (14), wobei das Steuergerät (16) Mittel enthält um die Verfahrensschritte der Verfahren (80) nach einem der Ansprüche 1 bis 13 auszuführen.

15. Elektrowerkzeug (120) mit einer elektrischen Maschine (12) zum Bereitstellen eines Antriebsmoments (53) und mit einer Vorrichtung (10) zum Ansteuern der elektrischen Maschine (12) nach Anspruch 14.

**Claims**

1. Method (80) for driving an electric machine (12), wherein the electric machine (12) has a stator (40), a rotor (42) and a coil arrangement (41) having at least one coil section (L1, L2, L3) for driving the rotor (42), wherein the coil arrangement (41) is electrically driven differently in a plurality of commutation steps by a control arrangement (10) in order to generate an alternating magnetic field for driving the rotor (42), wherein the electrical driving of the coil arrangement (41) is changed (104) between the commutation steps, and wherein the rotor (42) is assigned a detection arrangement (41; 50) which detects (66) at least one rotation parameter ($K_H$, $KP$) of the rotor (42), wherein an average value ($KP_M$) is determined (68) from a plurality of measurement values of the rotation parameter ($K_H$, $KP$) and a switchover time ($K_T$) between the commutation steps is set (104) on the basis of the average value ($KP_M$), **characterized in that** the switchover time ($K_T$) is furthermore set on the basis of a calibration factor (k) that takes account of a rotation-direction-dictated deviation.

2. Method according to Claim 1, **characterized in that** the average value ($KP_M$) is an average time duration ($KP_M$).

3. Method according to Claim 1 or 2, **characterized in that** the rotation parameter ($K_H$, $KP$) is a commutation period duration ($KP$) of the rotor (42).

4. Method according to any of Claims 1 to 3, **characterized in that** the switchover time ($K_T$) is determined (108) on the basis of a previous switchover time ($K_T$) and the time duration corresponding to the average value ($KP_M$).

5. Method according to any of Claims 1 to 4, **charac-**

**terized in that** the average value ($KP_M$) is determined as a moving average value ($KP_M$).

6. Method according to Claim 4 or 5, **characterized in that** the switchover time ($K_T$) is shifted on the basis of the calibration factor (k).

7. Method according to any of Claims 1 to 6, **characterized in that** the detection arrangement (41; 50) detects a switchover time ($K_H$) on the basis of a rotation position of the rotor (42).

8. Method according to Claim 7, **characterized in that** under predetermined conditions a switchover is effected between the commutation step on the basis of the detected switchover time ($K_H$).

9. Method according to Claim 7 or 8, **characterized in that** a switchover is effected between the commutation steps on the basis of the detected switchover time ($K_H$) if a predefined deviation of the determined switchover time ($K_T$) from the detected switchover time ($K_H$) is exceeded.

10. Method according to any of Claims 1 to 9, **characterized in that** a predefined number of measurement values are detected for determining the average value ($KP_M$).

11. Method according to any of Claims 1 to 10, **characterized in that** the detection arrangement (50) has a magnetic field sensor (50) which is assigned to a magnet arrangement (46; 48) of the electric machine (12) in order to detect the rotation parameter ($KP$).

12. Method according to any of Claims 1 to 10, **characterized in that** the detection arrangement (41) is formed by at least one part of the coil arrangement (41), wherein the rotation parameter ($K_H$, $KP$) is detected by the coil arrangement (41).

13. Method according to any of Claims 5 to 12, **characterized in that** the calibration factor (k) is determined on the basis of a rotational speed (n) of the rotor (42) and a rotation position of the rotor (42).

14. Device (10) for driving an electric machine (12), comprising a control unit (14), which has a plurality of controllable switches (26, 28) and is designed to energize the electric machine (12) and comprising a controller (16) for driving the control unit (14), wherein the controller (16) contains means to carry out the method steps of the method (80) according to any of Claims 1 to 13.

15. Electric tool (120) comprising an electric machine (12) for providing a drive torque (53) and comprising a device (10) for driving the electric machine (12) according to Claim 14.

**Revendications**

1. Procédé (80) pour exciter une machine électrique (12), la machine électrique (12) possédant un stator (40), un rotor (42) et un arrangement de bobines (41) comprenant au moins une branche de bobine (L1, L2, L3) destinée à l'entraînement du rotor (42), l'arrangement de bobines (41) étant excitée électriquement différemment par un arrangement de commande (10) en une pluralité d'étapes de commutation afin de générer un champ magnétique alternatif destiné à l'entraînement du rotor (42), l'excitation électrique de l'arrangement de bobines (41) étant modifiée entre les étapes de commutation et un arrangement de détection (41 ; 50) étant associé au rotor (42), lequel détecte (66) au moins un paramètre de rotation ($K_H$, KP) du rotor (42), une valeur moyenne ($KP_M$) étant déterminée (68) à partir d'une pluralité de valeurs mesurées du paramètre de rotation ($K_H$, KP) et un instant de permutation ($K_T$) entre les étapes de commutation étant réglé (104) sur la base de la valeur moyenne ($KP_M$), **caractérisé en ce que** l'instant de permutation ($K_T$) est en outre réglé sur la base d'un facteur de calibrage (k) qui tient compte d'un écart lié au sens de rotation.

2. Procédé selon la revendication 1, **caractérisé en ce que** la valeur moyenne ($KP_M$) est une durée moyenne ($KP_M$).

3. Procédé selon la revendication 1 ou 2, **caractérisé en ce que** le paramètre de rotation ($K_H$, KP) est une durée de période de commutation (KP) du rotor (42).

4. Procédé selon l'une des revendications 1 à 3, **caractérisé en ce que** l'instant de permutation ($K_T$) est déterminé (108) sur la base d'un instant de permutation ($K_T$) précédent et de la durée correspondant à la valeur moyenne ($KP_M$).

5. Procédé selon l'une des revendications 1 à 4, **caractérisé en ce que** la valeur moyenne ($KP_M$) est déterminée comme une valeur moyenne ($KP_M$) glissante.

6. Procédé selon la revendication 4 ou 5, **caractérisé en ce que** l'instant de permutation ($K_T$) est décalé sur la base du facteur de calibrage (k).

7. Procédé selon l'une des revendications 1 à 6, **caractérisé en ce que** l'arrangement de détection (41 ; 50) détecte un instant de permutation ($K_H$) sur la base d'une position de rotation du rotor (42).

8. Procédé selon la revendication 7, **caractérisé en ce que** dans des conditions prédéfinies, une permutation est effectuée entre les étapes de commutation sur la base de l'instant de permutation ($K_H$) détecté.

9. Procédé selon la revendication 7 ou 8, **caractérisé en ce qu'**une permutation est effectuée entre les étapes de commutation sur la base de l'instant de permutation ($K_H$) détecté, sous réserve qu'un écart prédéfini entre l'instant de permutation ($K_T$) déterminé et l'instant de permutation ($K_H$) détecté soit dépassé.

10. Procédé selon l'une des revendications 1 à 9, **caractérisé en ce qu'**un nombre prédéfini de valeurs mesurées sont détectées en vue de déterminer la valeur moyenne ($KP_M$).

11. Procédé selon l'une des revendications 1 à 10, **caractérisé en ce que** l'arrangement de détection (50) possède un capteur de champ magnétique (50), lequel est associé à un arrangement d'aimants (46 ; 48) de la machine électrique (12) en vue de détecter le paramètre de rotation (KP).

12. Procédé selon l'une des revendications 1 à 10, **caractérisé en ce que** l'arrangement de détection (41) est formé par au moins une partie de l'arrangement de bobines (41), le paramètre de rotation ($K_H$, KP) étant détecté par l'arrangement de bobines (41).

13. Procédé selon l'une des revendications 5 à 12, **caractérisé en ce que** le facteur de calibrage (k) est déterminé sur la base d'une vitesse de rotation (n) du rotor (42) et d'une position de rotation du rotor (42).

14. Dispositif (10) pour exciter une machine électrique (12), comprenant une unité de commande (14) qui possède une pluralité de commutateurs commandables (26, 28) et qui est configurée pour alimenter électriquement la machine électrique (12), et un contrôleur (16) destiné à piloter l'unité de commande (14), le contrôleur (16) contenant des moyens pour exécuter les étapes du procédé (80) selon l'une des revendications 1 à 13.

15. Outil électrique (120) pourvu d'une machine électrique (10) destinée à produire un couple d'entraînement (53) et comprenant un dispositif (10) pour exciter la machine électrique (12) selon la revendication 14.

Fig.1

EP 2 645 550 B1

Fig.2

Fig.3

EP 2 645 550 B1

Fig.4

EP 2 645 550 B1

Fig.5

Fig.6

Fig.7

Fig.8

Fig.9

**IN DER BESCHREIBUNG AUFGEFÜHRTE DOKUMENTE**

**In der Beschreibung aufgeführte Patentdokumente**

- US 20030121685 A1
- EP 2375558 A1
- EP 1796258 A1